(19) Europäisches Patentamt / European Patent Office / Office européen des brevets

(11) **EP 3 031 597 B1**

(12) **EUROPEAN PATENT SPECIFICATION**

(45) Date of publication and mention
of the grant of the patent:
**05.02.2020 Bulletin 2020/06**

(51) Int Cl.:
*B29C 61/00* (2006.01)        *C08G 18/79* (2006.01)
*C08G 18/02* (2006.01)        *C08G 18/32* (2006.01)

(21) Application number: **14197795.9**

(22) Date of filing: **12.12.2014**

(54) **Polyurethane shape memory materials**

Polyurethanformgedächtnismaterialien

Matériaux à mémoire de forme de polyuréthane

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.06.2016 Bulletin 2016/24**

(73) Proprietor: **Recticel**
**1140 Brussel (Evere) (BE)**

(72) Inventors:
• **Haucourt, Nancy**
**9770 Kruishoutem (BE)**
• **Jonckheere, Laura**
**9230 Wetteren (BE)**
• **Spanhove, Peter**
**9840 De Pinte (BE)**

(74) Representative: **Gevers Patents**
**Intellectual Property House**
**Holidaystraat 5**
**1831 Diegem (BE)**

(56) References cited:
EP-A1- 1 464 661    EP-A2- 0 361 418
US-A- 5 418 261    US-A1- 2013 178 550

## Description

Field of the invention

The present invention relates to shape memory polyurethane materials, more specifically it relates to thermoset shape memory polyurethane materials which have a first primary shape which is changeable into a further primary shape, i.e. a reprogrammable primary shape. The invention also relates to a method to prepare these materials and to a method to change the primary shape of these thermoset polyurethane shape memory materials.

Description of the existing art

Shape memory materials are well known smart materials which, apart from their "as-moulded" or "primary" or "original" or "permanent" shape, i.e. the shape in which they are initially produced or formed, can be deformed and fixed into a secondary (temporary) shape 2. This is called programming. This fixed secondary shape 2 can be acquired when the material is deformed at a temperature which is higher than the glass transition temperature ($T_g$) of the polymer and then cooled below this $T_g$ while being kept in the deformed state. The "original" or primary shape 1 can be recovered when the material in its secondary shape is heated above the $T_g$. This cycle of programming and recovery can be repeated several times, with different temporary shapes in subsequent cycles.

Polyurethane shape memory materials are also well known. For example US5418261 relates to polyurethane shape memory foams based on MDI and polyols having a high functionality and a very high ethylene oxide content. These thermoset foams are hydrophilic and have a relatively high crosslink density.

Shape memory materials are useful in many applications, notably in medical applications like self-tightening sutures and medical casts and bandages as e.g. taught in WO2014/001367. Shape memory materials of which the primary shape is changeable into a further primary shape are very useful for different applications. US8100843B2 (GM Global Technology Operations) for instance discloses thermoplastic shape memory materials for immobilising a limb. In order to make the shape memory polymer medical cast reusable for immobilising different limbs with different shapes, the primary (as-moulded) shape thereof is changed into a further primary shape. This may be accomplished by positioning the shape memory polymer in a moulding tool and remoulding the material into this further primary shape, corresponding to the general shape of the limb to be immobilised. Changing the primary shape into a further primary shape is only possible for thermoplastic materials, which have a melting point and can thus be remoulded into the desired shape. This can however not be achieved for thermoset materials, which have no melting point, due to their chemical crosslinking.

US4990545 (Sanyo Chemical) relates to a thermoplastic polyurethane resin of which the primary - shape is changeable into a further primary shape. US2003/0055198 relates to shape memory polymer compositions that can hold more than one primary shape. It states that for thermoset polymers the primary shape can be programmed only one time (page 2 par. [0018]). US2010/0249682 relates to medical casts using shape memory polymers of which the permanent shape may be changed into another permanent shape but only if the casts are formed from a thermoplastic resin. According to this application the shape of thermoset materials cannot be changed (page5 par. [0033]). Thermoplastic shape memory materials have serious disadvantages when compared to thermoset shape memory materials. Thermoplastic shape memory materials will show creep, inferior dimensional stability, less resistance to solvents and a slower recovery to the primary shape. Also it is more difficult to make foams from thermoplastic materials, especially from thermoplastic polyurethanes. US7723460 recognizes these problems and relates to "remoldable" (i.e. reprogrammable) shape memory polymers with thermo-reversible crosslinks. These crosslinks dissociate at relatively low temperatures so that the material behaves as a thermoplastic when heated, i.e. it will flow, but shows less of the problems of thermoplastic materials at ambient temperature. These materials are still not thermoset however and will still show disadvantages mentioned above.

It is an object of the invention to provide an article of a thermoset polyurethane shape memory material of which the primary shape is changeable into a further primary shape. It is further an object of the invention to provide a method for changing the primary shape of an article made of a thermoset polyurethane shape memory material into a further primary shape.

Summary of the invention

The invention is related to an article having a primary shape [herein after primary shape 1] and made of thermoset polyurethane shape memory material having a glass transition temperature ($T_g$) of between 25°C and 120°C, characterized in that said material has a transformation temperature of at least 130 °C, above which said primary shape 1 is changeable into a further primary shape 1' which is different from said primary shape 1.

The invention is further related to a method to change the primary shape 1 of such article into the further primary shape 1' different from said primary shape.

Surprisingly it was found that the primary shape 1 of articles made of the thermoset polyurethane shape memory materials, which are prepared using compositions and methods as disclosed in the invention, is changeable into a further primary shape. The materials exhibit valuable properties and are useful for a wide range of applications, not limited to medical applications. The thermoset polyurethane shape memory materials of the invention are preferably isocyanate-based and are preferably porous or cellular i.e. "foamed" materials or foams, where preferably the foaming is accomplished by using water as a chemical blowing agent. The thermoset shape memory polyurethane materials are preferably produced from compositions comprising isocyanates and polyols formulated in such a way that they exhibit a specific glass transition and crosslink density $M_c$. The glass transition or $T_g$ of the materials of the invention is between 25 and 120°C, more preferably at least 35°C. The crosslink density, as expressed by the calculated average molecular weight per crosslink or $M_c$, is at least 1000 Da.

Detailed description of the invention.

The article according to the invention, has a primary shape [herein after primary shape 1] and is made of thermoset polyurethane shape memory material having a glass transition temperature ($T_g$) of between 25 °C and 120°C, characterized in that said material has a transformation temperature of at least 130 °C, above which temperature said primary shape 1 is changeable into a further primary shape 1' different from said primary shape 1.

The materials of the current invention are thermoset materials. As known by the skilled in the art, thermoset materials are different from thermoplastic materials because the former do not have a melting temperature $T_m$ above which the material will start to flow and can therefore not be processed on equipment specific for thermoplastics such as injection moulding equipment. Although thermoset materials do not melt they will, when heated to extreme temperatures, eventually start to degrade by side reactions with ambient gases or materials or by decomposition or depolymerization. This decomposition temperature or $T_D$, the temperature at which the polymer will start to degrade, is typically around 180°C for the polyurethanes of the invention.

The chemical difference between thermoset and thermoplastic materials is that the former are formed of a covalently crosslinked structure, i.e. they have covalent bonds between the different polymer strands called crosslinks. These crosslinks are highly effective in preventing fluidization (melting) of the material, in contrast to thermoplastic materials that are formed of linear (not crosslinked) structures and which allow the material to melt and thus to be remoulded or recycled.

The number of crosslinks available in an amount of polymer is called the crosslink density and can more conveniently be expressed as the inversely related parameter $M_c$ which is the average molecular weight per crosslink. $M_c$ can be defined as the weight of an amount of polymer divided by the number of crosslinks present in that amount expressed in moles. The $M_c$ can be easily calculated from the amounts and properties of the raw materials present in the composition to make the materials of the invention. It should be noted that for thermoplastics the crosslink density is zero and therefore the $M_c$ tends to 'infinity'. For the thermoset shape memory polyurethane material of the invention the calculated $M_c$ is at least 1000 Da. More preferably the material has a crosslink density $M_c$ which is less than 15 000 Da, more preferably less than 10 000 Da, even more preferably less than 8 000 Da. The $M_c$ is most preferably between 2000 Da and 4000 Da.

Articles according to the invention are made of thermoset polyurethane shape memory materials. Articles made of a shape memory material have a primary shape 1 which is the shape in which the articles are originally moulded or cut. The articles made of shape memory materials can be deformed and fixed into a secondary shape 2. This secondary shape 2 will be stable at ambient temperature until the article is heated to a temperature higher than a transition temperature $T_{trans}$ after which the article will return to its primary shape. Therefore this secondary shape 2 is called a temporary shape whilst the primary shape is called the memorised or permanent shape. To return to the primary shape, the material of the article should be heated to a temperature higher than $T_{trans}$ but lower than the decomposition temperature $T_D$ of the material. Preferably the material should be heated to less than 10° C over $T_{trans}$. The deformation of the primary shape to the secondary shape can happen either by adiabatically deforming the primary shape to the secondary shape at ambient temperature (so called cold drawing) or, alternatively, by heating the article in its primary shape to a temperature over $T_{trans}$, at this temperature reshaping the article into the secondary shape and while constraining this shape cooling the material of the article to below $T_{trans}$ and releasing the article. Note that cold drawing may not always be possible for articles made of materials which are brittle below $T_{trans}$. For the materials of the invention $T_{trans}$ is equal to the glass transition temperature $T_g$ of the polyurethane material. This is the temperature at which the polyurethane undergoes its transition from the glass to the rubbery state. Preferably the polyurethane materials of the invention only have one well-defined $T_g$, however it is possible that the polyurethane materials according to the invention have multiple glass transitions at different transition temperatures leading to multiple stable secondary shapes. For the purpose of this invention, the $T_g$ of the shape memory polyurethane material refers to the temperature at which the material has its dominant glass transition, as measured by Dynamic Mechanical Thermal Analysis (DMTA). The article will return to its primary shape when heated to a temperature higher than the highest of these transition temperatures.

For the polyurethane materials of the invention the $T_g$ is between 25°C and 120°C, more preferably at least 35°C.

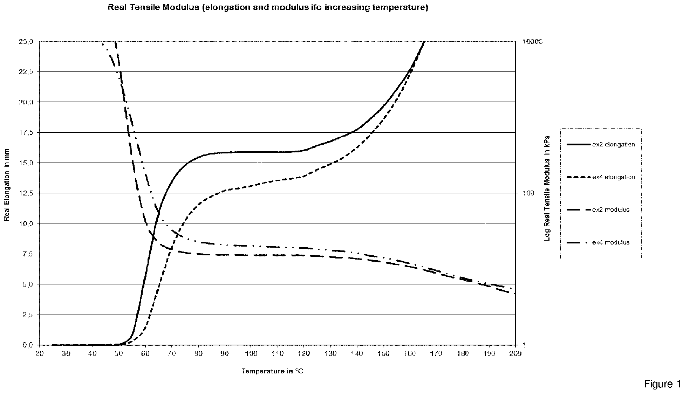

The primary shape 1 of the article according to the invention is changeable into a further primary shape 1', which is different from the primary shape 1. This further primary shape 1' is then the new memorized shape of the article. This means that, when this further primary shape 1' is reshaped into a secondary shape using one of the methods explained above, this secondary shape' will return to said further primary shape 1' when the article is heated to a temperature higher than the $T_g$ of the material. The article of which the primary shape 1 is changeable into a further primary shape1' is characterised in that the shape memory PU material of which the article is made, has a transformation temperature of at least 130°C, above which temperature said primary shape 1 is changeable into the further primary shape1'. It has been found that this transformation temperature corresponds to the temperature where the stiffness or tensile modulus of the material starts dropping. This can easily be observed by measuring the elongation of the material in function of the temperature. On the corresponding graph (see figure 1) a first significant increase of elongation can be noticed at a first transition temperature, $T_g$. A second increase of elongation can be observed at a higher temperature above 130°C. Surprisingly it has been found that this higher temperature corresponds to the transformation temperature as from which the primary shape can be changed. In this way, the transformation temperature can thus be easily determined from a graph in which the elongation of the material is measured in function of the temperature.

The invention is also related to a method for changing the primary shape 1 of the article made of the material according to the invention into a further primary shape 1'. This method includes the step of changing the primary shape 1 of said article into a further primary shape 1' different from said primary shape 1 at a temperature equal to or higher than the transformation temperature of the thermoset polyurethane shape memory material which is at least 130°C. In a preferred embodiment of the method, the article, having its primary shape 1, is heated to a temperature higher than the transformation temperature of the thermoset polyurethane shape memory material. At this temperature, the primary shape 1 of the article is changed into a further primary shape 1', and then cooled below the $T_g$ of the material whilst constraining it into said further primary shape 1' and the article is finally released in its further primary shape 1'. Preferably the temperature at which the article is heated to change its primary shape 1 into a further primary shape 1', is lower than 190°C to avoid decomposition of the material. The time during which the article is heated at this temperature, and which is required to change the primary shape 1 into the further primary shape 1', needs to be experimentally determined. The article in its further primary shape 1' is changeable into a still further primary shape 1" which is different from its further primary shape 1', by the method as described above. Further, it is also clear that the article can be reshaped into any secondary shape starting from any of its primary shapes, by the method as explained above (heating the article above its $T_g$, reshaping it into a secondary shape, cooling down the article in its secondary shape until a temperature lower than $T_g$).

As is known by those skilled in the art, 'polyurethanes' are understood to be materials containing urethane chemical bonds. Other chemical bonds are usually present next to the urethane bonds such as ester, ether, amide, urea etc. bonds. Sometimes the term 'polyurethanes' also comprises polyureas and polythiourethanes with no or very little actual urethane bonds. The thermoset shape memory polyurethane materials of the invention are preferably based on isocyanate chemistry, although polyurethane materials with the same shape memory characteristics could in principle be produced by non-isocyanate chemistry for example based on reactions between the correct choice of polycyclocarbonates and polyamines. Preferably the materials of the invention are prepared by reacting an isocyanate composition with an isocyanate reactive composition.

The isocyanate composition used to prepare the polyurethane materials of the invention can comprise any of the aliphatic, aromatic or araliphatic isocyanates or any of their mixtures, as well known in the art. The isocyanate composition may also comprise so-called modified isocyanates, obtained by introducing uretonimine-, carbodiimide-, allophanate- , biuret- etc. bonds into the isocyanates. So called isocyanate-terminated prepolymers, which are prepared by pre-reacting the isocyanate composition with part of the isocyanate-reactive composition can also be used. Preferred isocyanates are aromatic isocyanates and isomers, homologs, variants and prepolymers thereof, especially preferred are diphenylmethane diisocyanate (MDI) and toluene diisocyanate (TDI) and their mixtures, modified variants and prepolymers. Most preferred is are MDI- based isocyanates, such as such as polymeric (crude) MDI, 'pure MDI', uretonimine -modified pure MDI or prepolymers based on MDI. All these compounds are well known in the art and commercially available. Preferably the isocyanate composition of the invention has a NCO value between 10 and 35%, more preferably between 25 and 33%, and a functionality between 1.9 and 3, more preferably between 2 and 2.9.

The expression "NCO value" as used herein is the amount of NCO groups present in the isocyanate composition expressed as a weight percentage. The term "functionality" refers to the number average functionality. For isocyanates 'functionality' refers to the average number of isocyanate groups per molecule, for an isocyanate-reactive component the term 'functionality' refers to the average number of isocyanate-reactive groups per molecule.

The isocyanate reactive composition used to prepare the materials of the invention comprises one or more polyahls, and optionally one or more of the following components: chain extenders and/or crosslinkers, blowing agents, catalysts or other additives.

The term 'polyahl' as used herein refers to compounds having on average more than 1 isocyanate-reactive hydrogen containing group, specifically the term refers to polyols, polyamines, polythiols and polyacids. Preferred polyahls are polyols, especially polyether polyols or polyester polyols including polyester polyols derived from natural oils. More preferred are polyoxyalkylene polyether polyols prepared by ring opening polymerization of oxiranes, especially from ethylene oxide, propylene oxide and butylene oxide and their mixtures. Most preferred are polyether polyols based on propylene oxide and optionally ethylene oxide with a molecular weight between 100 and 6000 preferably between 350 and 1000, an average hydroxyl functionaly between 1.5 and 3.5 preferably between 1.9 and 2.1 and an oxypropylene content between 10 and 100 % more preferably between 75 and 100% . The production of these polyols and the way to control their average equivalent weights and functionalities is well known in the art.

As used herein the expression "molecular weight" refers to the number-average molecular weight.

The optional chain extenders and crosslinkers used to prepare the materials of the invention are isocyanate-reactive compounds with a molecular weight of at most 250. Chain extenders are difunctional compounds such as butanediol, ethylene glycol, neopentyl glycol, ethylene diamines and the like. Crosslinkers are compounds with a functionality of greater than 2such as glycerol, trimethylolpropane, sorbitol and the like. Crosslinkers will contribute to crosslinking while chain extenders will not. The amount of chain extenders and crosslinkers used is chosen such that the resulting material will have the desired properties, especially such that the $M_c$ and $T_g$ are within the preferred ranges of the invention.

Preferably the material of the invention is a 'foam' or cellular material. The foaming is accomplished by the addition of one or more blowing agents to the composition used to prepare the materials. Preferably the blowing agents are added to the isocyanate-reactive composition. The blowing agents can be inert or reactive. Examples of inert blowing agents comprise low boiling liquids such as short-chain alkanes or gases such as air, nitrogen, carbon dioxide. Reactive blowing agents can be of the decomposition type such as azodicarbonamide or water. Water will react with isocyanate to form an instable carbamic acid which will decompose into an amine and carbon dioxide. The preferred blowing agent for the materials of the invention is water.

The amount of blowing agent used is such as to result in a foamed material with the desired properties especially such that the resulting material has a density is between 10 and 500 kg/m$^3$, more preferably between 25 and 150 kg/m$^3$, even more preferably less than 100 kg/m$^3$, and such that the $T_g$ of the resulting material falls within the preferred range of the invention. The density refers to the overall density of the article in its first primary shape 1'. Obviously the density of the article can change when in the secondary shape or when changed into its further primary shape 1'.

The optional catalysts used in the composition to prepare the materials of the invention are the catalysts well known in the art and are preferably tertiary amine catalysts or organometallic catalysts. Examples are triethylenediamine,bis(N,N-dimethylaminoethyl)ether and dibutyltindilaurate. Catalysts are preferably used in an amount of 0 to 3% by weight on the total composition. Optionally the composition to prepare the materials of the invention can contain additives well known in the art of polyurethanes such as fire retardants, cell openers, antioxidants, internal mould release agents, biocides, phase change materials, gels, pigments, thermochromic colorants, perfumes, absorbants etc.

The thermoset shape memory polyurethane material of the article according to the invention is preferably prepared by allowing to react:

1. an isocyanate composition, preferable a MDI-based isocyanate composition having an NCO value between 10 and 35% , preferably between 25 and 33% and a functionality between 1.9 and 3 preferably between 2 and 2.9 with

2. an isocyanate-reactive composition comprising

a. a polyahl, preferably a polyether polyol with a molecular weight between 100 and 6000 Da preferably between 350 and 1000 Da, an oxypropylene content of between 10 and 100% preferably between 75 and 100 % and a functionality between 1.5 and 3.5, preferably between 1.9 and 2.1

b. optionally a blowing agent preferably water in an amount between 0.1 and 10% preferably between 0.5 and 5% by weight on the total isocyanate-reactive composition

c. optionally chain extenders and/or crosslinkers

d. optionally catalysts

e. optionally additives

where the isocyanate composition and the isocyanate-reactive composition are in such a ratio that the NCO index is between 80 and 120% preferably between 90 and 110 %

The expression "NCO index" as used herein refers to ratio of the number of isocyanate groups over the number of isocyanate-reactive groups present in the reaction mixture expressed as a percentage. Note that in order to calculate the NCO index a water molecule is assumed to have two reactive groups while a primary amine is assumed to have one. The isocyanate composition, the isocyanate-reactive composition, the amount of blowing agent and the NCO index need to be chosen such that the $M_c$ of the resulting material is at least 1000, preferably less than 15 000, more preferably less than 10 000. Most preferably the $M_c$ is between 2000 and 4000. The isocyanate composition and isocyanate-reactive composition are further chosen so that the $T_g$ of the resulting material is between 25 and 120°C preferably at least 35°C. A man skilled in the art knows how the $T_g$ can be tuned by e.g. the amount of blowing agent, the amount of crosslinker, the NCO index etc.

The reaction between the isocyanate and the isocyanate-reactive composition can be carried out as a so-called 'one-shot' system, where none of the isocyanate is pre-reacted or as a so-called 'prepolymer' system where part of the isocyanate composition is pre-reacted with the isocyanate reactive composition to form isocyanate-terminated prepolymers, or where part of the isocyanate-reactive composition is pre-reacted with the isocyanate composition to form so-called polyol prepolymers. The reacting mixture can be allowed to rise freely under either ambient conditions or under reduced pressure circumstances to form blocks or 'buns' or 'slabs' which can later be cut into the desired shapes which are then the primary shapes. Alternatively the reacting mixture can be poured into a closing mould, allowing to form directly a preferred first primary shape.

Examples

Polyurethane foams were produced on lab-scale by hand-mixing the isocyanates and isocyanate-reactive compositions given in table 1 below. After mixing the reacting mixture was poured into a recipient and allow to rise freely under ambient conditions. After complete cure, foam properties were measured.

The following compounds were used in making the examples :

Isocyanate 1: Suprasec 2020 (Huntsman), an urethonimine modified 'pure' MDI with an NCO value of 29.5 % and a functionality of 2.1

Isocyanate 2: Lupranate M20W (BASF) - a crude MDI with an NCO value of 31.5 % and a functionality of 2.7

Polyol 1: a polyoxypropylene glycol with an equivalent weight of 300, functionality of 2 (OH value 187)

Polyol 2: a polyoxypropylene glycol with an equivalent weight of 200, functionality of 2 (OH value 280)

Table 1

|  | ex1 | ex2 | ex3 | ex4 | c1 | c2 |
|---|---|---|---|---|---|---|
| **Composition** |  |  |  |  |  |  |
| polyol 1 | 100 |  |  |  |  |  |
| polyols 2 |  | 100 | 100 | 100 | 100 | 100 |
| water (php*) | 2 | 2 | 2 | 2 | 2 | 2 |
| crosslinker (php*) | 0 | 0 | 2 | 0 | 2 | 10 |
| isocyanate1 | 99 | 110 | 122 |  |  |  |
| isocyanate2 |  |  |  | 104 | 116 | 161 |
| index | 105 | 105 | 105 | 105 | 105 | 105 |
| **Properties** |  |  |  |  |  |  |
| density (kg/m3) | 50 | 55 | 55 | 55 | 55 | 60 |
| $T_g$ (°C) | 48 | 70 | 72 | 75 | 82 | 120 |
| transformation temp (°C) | 155 | 160 | 160 | 160 | 160 | 160 |
| calculated $M_c$ | 2953 | 2809 | 2437 | 836 | 779 | 648 |
| changeability of primary shape into a further primary shape | YES | YES | YES | partially | NO | NO |
| * php : parts per hundred parts of polyol | | | | | | |

Calculation of the $M_c$ value

The $M_c$ was calculated by dividing the weight of an amount of polymer by the total amount of crosslinks present in that amount of material expressed in moles as calculated from the average functionalities and equivalent weights of the raw materials. For material produced at an index higher than 100, the $M_C$ is corrected by assuming an extra crosslink for every "extra" NCO group, for an index, the opposite is assumed for an index below 100.

$$\text{Formula } M_C = (x+y+z-1.44w)/ ((x.N(F_x-2)/4200F_x) + (y.V(F_y-2)/5600F_y) + (z(F_z-2)/E.F_z) + ((\text{Index} - 100)N.x/4200 \text{ Index}))$$

where :

x - pbw isocyanate
y = pbw polyol
z = pbw chain extender
w = pbw water
N = NCO value iso
$F_X$ = number average functionality of isocyanate
V = OH value polyol
$F_y$ = average functionality polyol
E = av. equivalent weight chain extender
$F_z$ = average functionality chain extender
Index =NCO index

$T_g$ measurement

The $T_g$ was determined by DMTA analysis (ASTM D7028-07e1).

Determination of the transformation temperature

In order to measure the transformation temperature, following method was used.

- a foam sample (length 3cm, width 2cm, height 1 cm) is clamped in a bending test and a fixed load of 160 g is applied in the middle of the sample.
- The clamped sample is put in an oven of which the temperature increases in a linear way (speed 1.8°C/min) from room temperature up to 200°C.
- the elongation of the sample is measured in function of the temperature (see fig 1)
- the stiffness (tensile modulus) is calculated from the sample surface, elongation and applied force

The transformation temperature was determined on the curve as the temperature above 120° where the elongation shows an increase of 20 % versus the elongation at 130°C.

Shape memory and changeability of the primary shape 1 into a further primary shape 1'

To asses shape memory and ability to change the primary shape 1 into a further primary shape 1', samples were cut in the shape of rectangular beams with dimensions (5 mm x 30 mm) which represent the first primary shape 1.
All the materials in table one showed shape memory properties as proven by the following experiment. The samples were heated to a temperature about 10°C higher than $T_g$ and at this temperature shaped into a secondary shape, e.g. by winding the rectangular beams into a spiral. While restraining the samples into this secondary shape they were cooled to at least about 10°C below $T_g$ and released. The samples then remained stable into the secondary shape. When heated to a temperature higher than $T_g$ the samples returned the first primary shape.

Changing the primary shape 1 into a further primary shape 1':

The primary shape of samples made of materials of examples 1 to 3 could be changed into a further primary shape. This was proven by the following experiments. The samples were heated to at least 10°C over $T_g$ and formed into a new shape by e.g. winding the rectangular beams into a spiral. In this shape the samples were then heated to at least 170°C for 5 minutes, and then cooled to at least 10°C below $T_g$ and released. In this new shape the samples were submitted to the shape memory test described above. All samples of the materials of examples 1 to 4 returned to the

EP 3 031 597 B1

newly programmed primary shape (the spiral shape) after heating to $T_g$ or higher. The samples of the materials of the comparative examples c1 and c2 returned to the first primary shape 1 which demonstrates that the first primary shape 1 could not be changed into a further primary shape 1' The primary shape of the sample of the material of example 4 only partially changed into the new primary shape.

**Claims**

1. A method for changing the primary shape [herein after primary shape 1] of a foam made of a thermoset polyurethane shape memory material, into a further primary shape 1', wherein said thermoset polyurethane shape memory material is **characterized by**

   (i) having a glass transition temperature ($T_g$) of between 25 °C and 120 °C,
   (ii) having a temperature above which the primary shape 1 can be changed into a further primary shape 1' different from said primary shape 1 [herein after transformation temperature] and which is at least 130 °C,
   (iii) having an average molecular weight per crosslink [Mc hereinafter] between 1000 and 4000 Da, and

   said method including the step of changing the primary shape 1 of said foam into a further primary shape 1', different from said primary shape 1, at a temperature equal to or higher than the transformation temperature of the thermoset polyurethane shape memory material.

2. The method according to claim 1, **characterized in that** said thermoset polyurethane shape memory material has a Mc between 2000 and 4000

3. The method according to claim 1 or claim 2, **characterized in that** said foam has a density between 10 and 500 kg/m$^3$, more preferably between 25 and 150 kg/m$^3$, even more preferably less than 100 kg/m$^3$.

4. The method according to any one of claims 1 to 3, **characterized in that** the glass transition temperature ($T_g$) of the thermoset polyurethane shape memory material is at least 35 °C.

5. The method according to any one of claims 1 to 4, **characterized in that** the transformation temperature of the thermoset polyurethane shape memory material is lower than 190 °C.

6. The method according to any one of claims 1 to 5, **characterized in that** the transformation temperature of the thermoset polyurethane shape memory material is lower than 170 °C.

7. The method according to any one of claims 1 to 6, **characterized in that** the thermoset polyurethane shape memory material is prepared from at least a MDI-based isocyanate composition having a number averaged functionality between 1.9 and 2.9.

8. The method according to any one of claims 1 to 7, **characterized in that** the thermoset polyurethane shape memory material is prepared from at least a polyether polyol with a molecular weight between 100 and 6000 Da preferably between 350 and 1000 Da, an oxypropylene content of between 10 and 100% preferably between 75 and 100% and a functionality between 1.5 and 3.5, preferably between 1.9 and 2.1.

9. The method according to any one of claims 1 to 8, **characterized in that** said further primary shape 1', after cooling down to a temperature below the $T_g$ of the thermoset polyurethane shape memory material, is again changeable into a still further primary shape 1".

10. The method according to any one of claims 1 to 9, **characterized in that** upon changing the primary shape 1 or the further primary shape 1' of the foam, at least part of the thermoset polyurethane shape memory material is compressed or stretched.

11. A foam having a primary shape 1 and made of a thermoset polyurethane shape memory material, wherein said thermoset polyurethane shape memory material is **characterized by**

    (i) having a glass transition temperature ($T_g$) of between 35 °C and 120 °C
    (ii) having a transformation temperature which is at least 130 °C

(iii) having a Mc between 1000 and 4000 Da, and

wherein the primary shape 1 of the foam is changeable into a further primary shape 1' different from said primary shape 1 by applying the method according to any one of claims 1 to 10.

12. A foam having a further primary shape 1' obtained by subjecting a foam having a primary shape 1 and made of a thermoset polyurethane shape memory material to the method according to any one of claims 1 to 10.
wherein said thermoset polyurethane shape memory material is **characterized by**

(i) having a glass transition temperature ($T_g$ of between 25 °C and 120 °C,
(ii) having a temperature above which the primary shape 1 can be changed into a further primary shape 1' different from said primary shape 1 [herein after transformation temperature] and which is at least 130 °C,
(iii) having an average molecular weight per crosslink [Mc hereinafter] between 1000 and 4000 Da.

## Patentansprüche

1. Ein Verfahren zum Ändern der primären Form [nachstehend primäre Form 1] eines Schaums hergestellt aus einem wärmegehärteten Polyurethanformgedächtnismaterials in eine weitere primäre Form 1', wobei das erwähnte wärmegehärtete Polyurethanformgedächtnismaterial **dadurch gekennzeichnet ist, dass** es

(i) eine Glasübergangstemperatur ($T_g$) von zwischen 25 °C und 120 °C hat,
(ii) eine Temperatur hat, über der die primäre Form 1 in eine weitere primäre Form 1', sich unterscheidend von der erwähnten primären Form 1, geändert werden kann [nachstehend Transformationstemperatur] und die mindestens 130 °C beträgt,
(iii) eine durchschnittliche Molekülmasse pro Verzweigungseinheit [nachstehend Mc] zwischen 1000 und 4000 Da hat, und

dass das erwähnte Verfahren den Schritt des Änderns der primären Form 1 des erwähnten Schaums in eine weitere primäre Form 1', sich unterscheidend von der erwähnten primären Form 1, bei einer Temperatur umfasst, die gleich hoch ist wie oder höher ist als die Transformationstemperatur des wärmegehärteten Polyurethanformgedächtnismaterials.

2. Das Verfahren nach Anspruch 1, **dadurch gekennzeichnet, dass** das erwähnte wärmegehärtete Polyurethanformgedächtnismaterial eine Mc zwischen 2000 und 4000 hat.

3. Das Verfahren nach Anspruch 1 oder Anspruch 2, **dadurch gekennzeichnet, dass** der erwähnte Schaum eine Dichte von zwischen 10 und 500 kg/m$^3$ hat, noch besser zwischen 25 und 150 kg/m$^3$ und sogar noch besser weniger als 100 kg/m$^3$.

4. Das Verfahren nach irgendeinem der Ansprüche 1 bis 3, **dadurch gekennzeichnet, dass** die Glasübergangstemperatur ($T_g$) des wärmegehärteten Polyurethanformgedächtnismaterials mindestens 35 °C beträgt.

5. Das Verfahren nach irgendeinem der Ansprüche 1 bis 4, **dadurch gekennzeichnet, dass** die Transformationstemperatur des wärmegehärteten Polyurethanformgedächtnismaterials niedriger als 190 °C ist.

6. Das Verfahren nach irgendeinem der Ansprüche 1 bis 5, **dadurch gekennzeichnet, dass** die Transformationstemperatur des wärmegehärteten Polyurethanformgedächtnismaterials niedriger als 170 °C ist.

7. Das Verfahren nach irgendeinem der Ansprüche 1 bis 6, **dadurch gekennzeichnet, dass** das wärmegehärtete Polyurethanformgedächtnismaterial aus zumindest einer MDI-basierten Isocyanatzusammensetzung mit einer zahlenmittleren Funktionalität zwischen 1,9 und 2,9 zubereitet ist.

8. Das Verfahren nach irgendeinem der Ansprüche 1 bis 7, **dadurch gekennzeichnet, dass** das wärmegehärtete Polyurethanformgedächtnismaterial aus zumindest einem Polyetherpolyol mit einer Molekülmasse zwischen 100 und 6000 Da, bevorzugt zwischen 350 und 1000 Da, einem Oxypropylengehalt von zwischen 10 und 100 %, bevorzugt zwischen 75 und 100 % und einer Funktionalität zwischen 1,5 und 3,5, bevorzugt zwischen 1,9 und 2,1, zubereitet ist.

**9.** Das Verfahren nach irgendeinem der Ansprüche 1 bis 8, **dadurch gekennzeichnet, dass** die erwähnte weitere Form 1', nach dem Abkühlen auf eine Temperatur unter die $T_g$ des wärmegehärteten Polyurethanformgedächtnismaterials, wieder in noch eine weitere primäre Form 1" geändert werden kann.

**10.** Das Verfahren nach irgendeinem der Ansprüche 1 bis 9, **dadurch gekennzeichnet, dass** beim Ändern der primären Form 1 oder der weiteren primären Form 1' des Schaums zumindest ein Teil des wärmegehärteten Polyurethanformgedächtnismaterials komprimiert oder gedehnt wird.

**11.** Ein Schaum mit einer primären Form 1 und hergestellt aus einem wärmegehärteten Polyurethanformgedächtnismaterial, wobei das erwähnte wärmegehärtete Polyurethanformgedächtnismaterial dadurch charakterisiert ist, dass es

(i) eine Glasübergangstemperatur ($T_g$) von zwischen 35 °C und 120 °C hat,
(ii) eine Transformationstemperatur hat, die mindestens 130 °C beträgt,
(iii) eine Mc zwischen 1000 und 4000 Da hat, und

wobei die primäre Form 1 des Schaums in eine weitere primäre Form 1', sich unterscheidend von der erwähnten primären Form 1, veränderbar ist, indem das Verfahren nach irgendeinem der Ansprüche 1 bis 10 angewendet wird.

**12.** Ein Schaum mit einer weiteren primären Form 1', erhalten, indem ein Schaum mit einer primären Form 1 und hergestellt aus einem wärmegehärteten Polyurethanformgedächtnismaterial dem Verfahren nach irgendeinem der Ansprüche 1 bis 10 unterzogen wird,
wobei das erwähnte wärmegehärtete Polyurethanformgedächtnismaterial **dadurch gekennzeichnet ist, dass** es

(i) eine Glasübergangstemperatur ($T_g$) von zwischen 25 °C und 120 °C hat,
(ii) eine Temperatur hat, über der die primäre Form 1 in eine weitere primäre Form 1' sich unterscheidend von der erwähnten primären Form 1, geändert werden kann [nachstehend Transformationstemperatur] und die mindestens 130 °C beträgt,
(iii) eine durchschnittliche Molekülmasse pro Verzweigungseinheit [nachstehend Mc] zwischen 1000 und 4000 Da hat.

## Revendications

**1.** Procédé pour changer la forme primaire [ci-après la forme primaire 1] d'une mousse faite d'un matériau à mémoire de forme polyuréthane thermodurcissable, en une autre forme primaire 1', dans lequel ledit matériau à mémoire de forme polyuréthane thermodurcissable est **caractérisé en ce qu'**il

(i) présente une température de transition vitreuse ($T_g$) comprise entre 25 °C et 120 °C,
(ii) présente une température au-dessus de laquelle la forme primaire 1 peut être transformée en une autre forme primaire 1' différente de ladite forme primaire 1 [ci-après la température de transformation] et qui est d'au moins 130 °C,
(iii) présente un poids moléculaire moyen par réticulation [ci-après Mc] compris entre 1000 et 4000 Da, et

ledit procédé comprenant l'étape consistant à transformer la forme primaire 1 de ladite mousse en une autre forme primaire 1', différente de ladite forme primaire 1, à une température égale ou supérieure à la température de transformation du matériau à mémoire de forme polyuréthane thermodurcissable.

**2.** Procédé selon la revendication 1, **caractérisé en ce que** ledit matériau à mémoire de forme polyuréthane thermodurcissable a une valeur Mc comprise entre 2000 et 4000.

**3.** Procédé selon la revendication 1 ou la revendication 2, **caractérisé en ce que** ladite mousse a une densité comprise entre 10 et 500 kg/m³, plus préférentiellement entre 25 et 150 kg/m³, encore plus préférentiellement inférieure à 100 kg/m³.

**4.** Procédé selon l'une quelconque des revendications 1 à 3, **caractérisé en ce que** la température de transition vitreuse ($T_g$) du matériau à mémoire de forme polyuréthane thermodurcissable est d'au moins 35 °C.

**5.** Procédé selon l'une quelconque des revendications 1 à 4, **caractérisé en ce que** la température de transformation du matériau à mémoire de forme polyuréthane thermodurcissable est inférieure à 190 °C.

**6.** Procédé selon l'une quelconque des revendications 1 à 5, **caractérisé en ce que** la température de transformation du matériau à mémoire de forme polyuréthane thermodurcissable est inférieure à 170 °C.

**7.** Procédé selon l'une quelconque des revendications 1 à 6, **caractérisé en ce que** le matériau à mémoire de forme polyuréthane thermodurcissable est préparé à partir d'au moins une composition d'isocyanate à base de MDI ayant une fonctionnalité moyenne numérique comprise entre 1,9 et 2,9.

**8.** Procédé selon l'une quelconque des revendications 1 à 7, **caractérisé en ce que** matériau à mémoire de forme polyuréthane thermodurcissable est préparé à partir d'au moins un polyéther polyol ayant un poids moléculaire compris entre 100 et 6000 Da de préférence entre 350 et 1000 Da, une teneur en oxypropylène comprise entre 10 et 100 % de préférence entre 75 et 100 % et une fonctionnalité comprise entre 1,5 et 3,5, de préférence entre 1,9 et 2,1.

**9.** Procédé selon l'une quelconque des revendications 1 à 8, **caractérisé en ce que** ladite autre forme primaire 1', après refroidissement à une température inférieure à la $T_g$ du matériau à mémoire de forme polyuréthane thermodurcissable, peut à nouveau être transformée en encore une autre forme primaire 1".

**10.** Procédé selon l'une quelconque des revendications 1 à 9, **caractérisé en ce que** lors du changement de la forme primaire 1 ou de l'autre forme primaire 1' de la mousse, au moins une partie du matériau à mémoire de forme polyuréthane thermodurcissable est comprimée ou étiré.

**11.** Mousse ayant une forme primaire 1 et faite d'un matériau à mémoire de forme polyuréthane thermodurcissable, dans laquelle ledit matériau à mémoire de forme polyuréthane thermodurcissable est **caractérisé en ce qu'**il

(i) présente une température de transition vitreuse ($T_g$) comprise entre 35 °C et 120 °C
(ii) présente une température de transformation d'au moins 130 °C
(iii) présente un Mc compris entre 1000 et 4000 Da, et

dans laquelle la forme primaire 1 de la mousse peut être transformée en une autre forme primaire 1' différente de ladite forme primaire 1 en appliquant le procédé selon l'une quelconque des revendications 1 à 10.

**12.** Mousse ayant une autre forme primaire 1' obtenue en soumettant une mousse ayant une forme primaire 1 et faite d'un matériau à mémoire de forme polyuréthane thermodurcissable au procédé selon l'une quelconque des revendications 1 à 10.
dans laquelle ledit matériau à mémoire de forme polyuréthane thermodurcissable est
**caractérisé en ce qu'**il

(i) présente une température de transition vitreuse ($T_g$) comprise entre 25 °C et 120 °C,
(ii) présente une température au-dessus de laquelle la forme primaire 1 peut être transformée en une autre forme primaire 1' différente de ladite forme primaire 1 [ci après température de transformation] et qui est d'au moins 130 °C,
(iii) présente un poids moléculaire moyen par réticulation [Mc ci-après] compris entre 1000 et 4000 Da.

**Real Tensile Modulus (elongation and modulus ifo increasing temperature)**

Figure 1

**EP 3 031 597 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5418261 A
- WO 2014001367 A
- US 8100843 B2
- US 4990545 A
- US 20030055198 A
- US 20100249682 A
- US 7723460 B